# EUROPEAN PATENT APPLICATION

(11) **EP 4 763 679 A1**
(43) Date of publication of application: **24.06.2026**
(21) Application number: 25166534.5
(22) Date of filing: 27.03.2025
(51) Int. Cl.: B62D 35/00, B62D 37/02

(54) **REAR SPOILER APPARATUS FOR VEHICLE**

(30) Priority: 23.12.2024 KR 20240193520
(71) Applicant: Hyundai Mobis Co., Ltd., Gangnam-gu Seoul 06141 (KR)
(72) Inventor: BYUN, Jae Sup, 16891 Yongin-si, Gyeonggi-do (KR)
(74) Representative: Jung, Minkyu

(57) **Abstract**

A rear spoiler apparatus for a vehicle, and a system therefor are provided. The rear spoiler includes an actuator to generate power, a housing which has a guide groove and to which the actuator is coupled, a spoiler including a frame part having a guide bar connected to the guide groove and a flap part rotatably connected to the frame part, and a driving module to transmit the power of the actuator to the spoiler. The spoiler may operate in a first mode in which the frame part and the flap part linearly move from an end of a trunk lid to the rear of the vehicle and the frame part is drawn out, and operate in a second mode in which the flap part in the first mode state is tilted and the flap part is deployed.

## Description

### CROSS-REFERENCE TO RELATED APPLICATION

This application claims priority to and the benefit of Korean Patent Application No. 10-2024-0193520, filed on December 23, 2024, in the Korean Intellectual Property Office, the entire disclosure of which is incorporated herein by reference in its entirety for all purposes.

### BACKGROUND

### 1. Field

The present invention relates to a rear spoiler apparatus for a vehicle.

### 2. Description of the Related Art

Since a vehicle body tends to be raised as a vehicle speed increases while a vehicle is traveling, a traction of a tire is weakened in this case, thereby degrading traveling stability and causing accidents in severe cases. To prevent this, a spoiler, which is an attachment configured to push the vehicle body down using an airflow when a vehicle is traveling, is installed on the vehicle and is also called an air spoiler because the spoiler changes the airflow.

Such an air spoiler is installed at the rear of the vehicle, and there are problems that the degree of freedom in design is limited, it is difficult to change the design after installation, and the design quality is degraded due to the installation of the air spoiler in the case of application to high-end vehicles.

In this way, there are problems that spoilers used for a technology for improving aerodynamic performance to improve fuel efficiency and driving stability of the vehicle have limitations, and the shape of the vehicle or the specifications of the spoiler need to be changed to improve additional aerodynamic performance.

### SUMMARY

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

The present disclosure seeks to provide solutions to solve the above-mentioned problems and aims to provide a rear spoiler apparatus for a vehicle, which is installed on an inner side of a trunk lid of the vehicle to be drawn outward from the vehicle and tilts to adjust an airflow, thereby improving driving stability and aerodynamic performance.

Objects of the present invention are not limited to the above-described object, and other objects that are not described will be able to be clearly understood by those skilled in the art from the following description.

In a general aspect of the disclosure, a rear spoiler apparatus for a vehicle, includes: an actuator configured to generate power; a housing which has a guide groove and to which the actuator is coupled; a spoiler including a frame part having a guide bar connected to the guide groove and a flap part rotatably connected to the frame part; and a driving module configured to transmit the power of the actuator to the spoiler, wherein the spoiler is configured to operate in a first mode in which the frame part and the flap part linearly move from an end of a trunk lid to the rear of the vehicle and the frame part is drawn out, and operate in a second mode in which the flap part in the first mode state is tilted and the flap part is deployed.

The driving module may include: a first loader of which one end is connected to a shaft connected to the actuator; a second loader of which one end is rotatably connected to the other end of the first loader; a holder configured to slide along a movement space of a guide rail provided in the housing; and an ejector disposed in an internal space of the holder and rotatably connected to one of a pair of connection protrusions provided at the other end of the second loader.

The rear spoiler apparatus may further include a guide cam rotatably coupled to the holder and disposed to protrude to the internal space through rotation, wherein the ejector may have an insertion groove into which the guide cam protruding to the internal space is inserted.

In the first mode, the guide cam is configured to protrude to the internal space, and the ejector is configured to move rearward along the movement space of the guide rail along with the holder in a state in which the guide cam is inserted into the insertion groove, and in the second mode, the guide cam is further configured to protrude outward from the internal space through rotation, and the ejector is further configured to move rearward along the internal space in a state in which the guide cam is separated from the insertion groove.

The guide rail may have an accommodation groove configured to accommodate the guide cam protruding outward from the internal space.

The frame part may be connected to the holder to slide along with the holder.

The flap part may be configured to tilt upward from the frame part upon rotational operation of a link module connecting a flap bracket attached to a bottom surface of the flap part and a frame bracket attached to the frame part.

The link module may include: a driving link of which one end is rotatably connected to the other of the pair of connection protrusions; a first connection link of which one end of one surface is rotatably connected to a front portion of one side of the frame bracket and another end of the one surface is rotatably connected to the other end of the driving link; a first driven link of which one end is rotatably connected to a front portion of the other side of the frame bracket and another end of the first driven link is rotatably connected to a front portion of one side of the flap bracket; a second driven link of which one end is rotatably connected to a rear portion of the other side of the frame bracket and another end of the second driven link is rotatably connected to a rear portion of the one side of the flap bracket; and a second connection link of which one end is rotatably connected to the other surface of the first connection link and the other end is rotatably connected to the other end of the second driven link.

The rear spoiler apparatus may further include a rear lamp provided on the spoiler.

The rear lamp may include a lamp housing coupled to an end of the frame part, wherein the rear spoiler may further include a plurality of light sources that are provided in the lamp housing.

In another general aspect of the disclosure, a rear spoiler system for a vehicle, includes: an actuator configured to generate power; a housing having a guide groove to which the actuator is coupled to the housing; a spoiler including: a frame part having a guide bar connected to the guide groove, and a flap part rotatably connected to the frame part; and a driver configured to transmit the power of the actuator to the spoiler, wherein, in a first mode, the frame part and the flap part linearly move from an end of a trunk lid to the rear of the vehicle and the frame part is drawn out, and wherein, in a second mode, the flap part in the first mode state is tilted and the flap part is deployed.

The driver may include: a first loader of which one end is connected to a shaft connected to the actuator; a second loader of which one end is rotatably connected to the other end of the first loader; a holder configured to slide along a movement space of a guide rail provided in the housing; and an ejector disposed in an internal space of the holder and rotatably connected to one of a pair of connection protrusions provided at the other end of the second loader.

The system may further include a guide cam rotatably coupled to the holder and disposed to protrude to the internal space through rotation, wherein the ejector may have an insertion groove into which the guide cam protruding to the internal space is inserted.

The system may further include a rear lamp provided on the spoiler.

### BRIEF DESCRIPTION OF THE DRAWINGS

FIG. 1 is a view illustrating a rear spoiler apparatus for a vehicle according to an embodiment of the present invention;
FIG. 2 is a view illustrating a change in a spoiler of the rear spoiler apparatus according to an operation mode;
FIG. 3 is a view illustrating a configuration of the rear spoiler apparatus;
FIG. 4 is a view illustrating a link module of the rear spoiler apparatus;
FIGS. 5 and 6 are views illustrating driving of the link module in a first mode and a second mode;
FIG. 7 is a view illustrating a holder disposed on a guide rail and an ejector disposed on the holder in a driving module;
FIG. 8 is a view illustrating driving states of the holder and the ejector according to the operation mode; and
FIG. 9 is a view illustrating driving states of the driving module and the spoiler according to the operation mode.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Throughout the specification, when a component or element is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

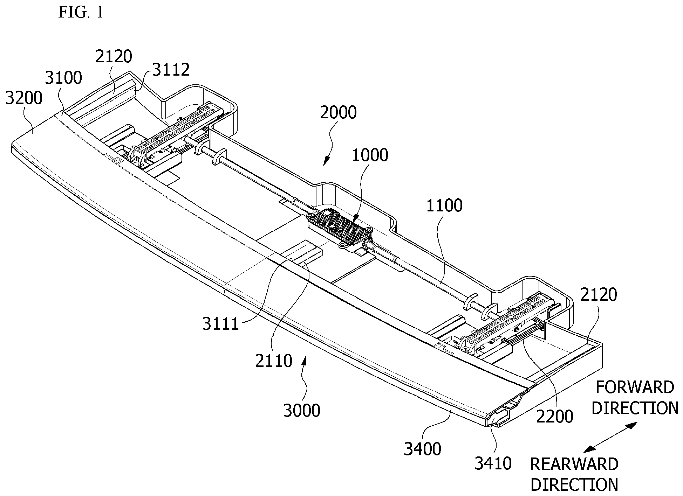

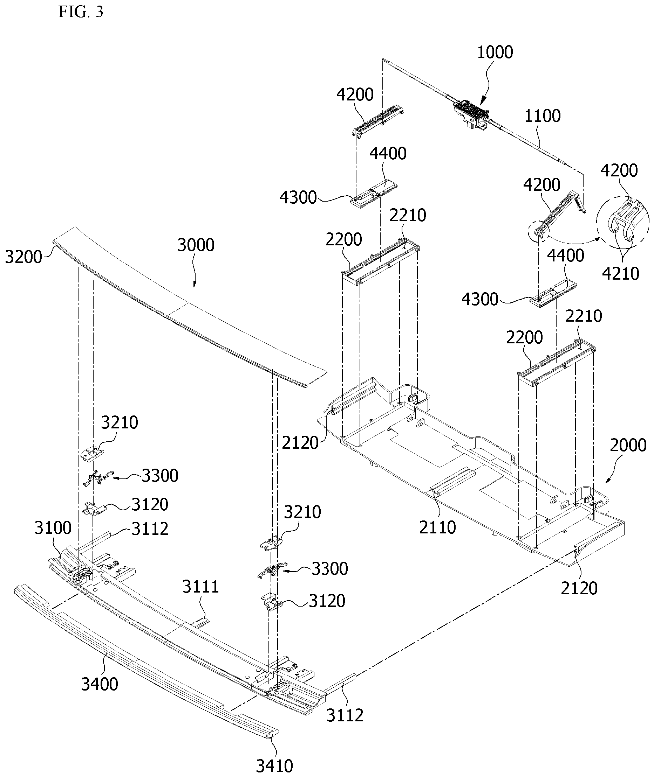

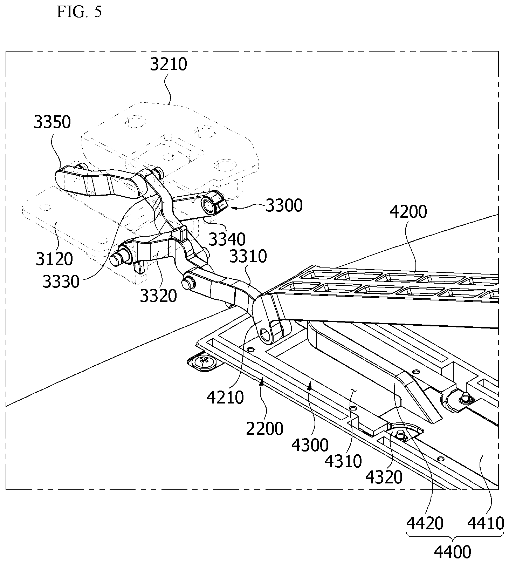

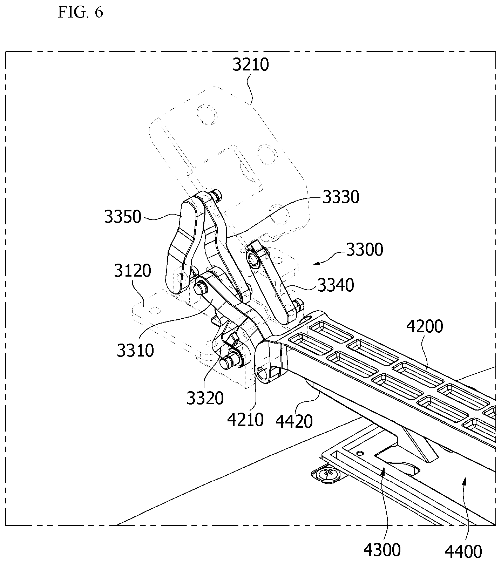

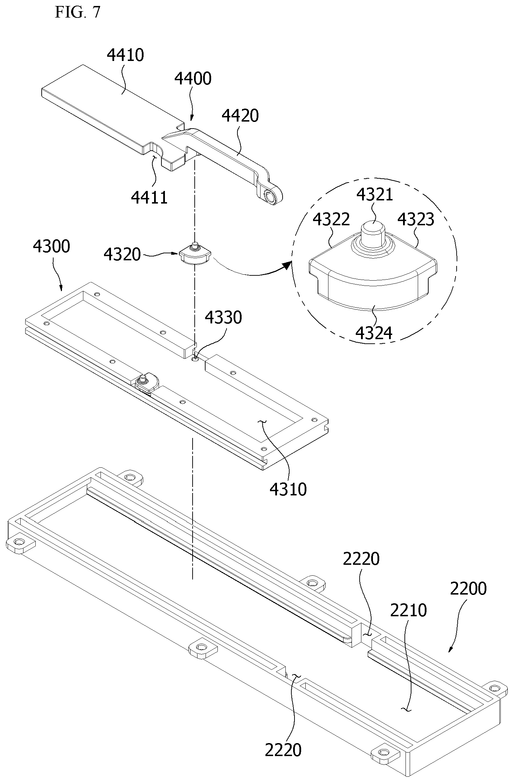

FIGS. 1 to 9 illustrate a spoiler apparatus and a configuration and operation mode of the spoiler apparatus according to an embodiment of the present invention.

Referring to the drawings, a rear spoiler apparatus for a vehicle according to an embodiment of the present invention may include an actuator 1000, a housing 2000, a spoiler 3000, and a driving module 4000.

The actuator 1000 may be connected to a control device (not illustrated) of a vehicle and may generate power according to a signal transmitted from the control device. In an embodiment, an electric motor may be used as the actuator 1000. The actuator 1000 may be connected to a shaft 1100 to rotate the shaft 1100. The shaft 1100 may rotate clockwise or counterclockwise to drive the spoiler 3000.

The housing 2000 has a guide groove 2100, and the actuator 1000 may be coupled and fixed to the housing 2000. The entirety of the housing 2000 may have a plate-shaped structure which extends in a width direction of the vehicle. In an embodiment, the housing 2000 may be installed on an inner side of a trunk lid T of a vehicle C.

The guide groove 2100 may include a center guide groove 2110 positioned in a central portion of the housing 2000 and side guide grooves 2120 positioned at both sides thereof. The center guide groove 2110 and the side guide grooves 2120 may extend in the width direction of the housing, that is, in a front-rear direction of the vehicle.

A pair of guide rails 2200 may be provided in the housing 2000. Each guide rail 2200 may be disposed adjacent to the side guide groove 2120. The guide rail 2200 may have a movement space 2210 extending in the front-rear direction of the vehicle.

The shaft 1100 may be disposed with a structure extending in a longitudinal direction of the housing 2000 (i.e., the width direction of the vehicle), and both end portions of the shaft 1100 may be positioned in the movement space 2210.

In an embodiment, the guide rail 2200 may be attached to the housing 2000 through a fastening part such as a bolt. Of course, the guide rail 2200 may be integrated with the housing 2000.

The spoiler 3000 may be disposed on the housing 2000 to slide in the front-rear direction. The spoiler 3000 may include a frame part 3100 and a flap part 3200.

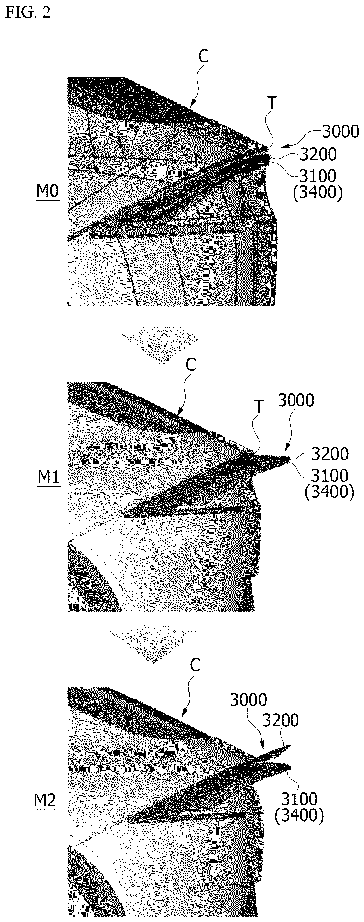

As illustrated in FIG. 2, the spoiler 3000 is formed to operate in a first mode M1 in which the frame part 3100 and the flap part 3200 in a basic mode M0, in which the spoiler 3000 is disposed on the inner side of the trunk lid T, are linearly moved from an end of the trunk lid T in a forward direction of the vehicle and drawn out, and operate in a second mode M2 in which the flap part 3200 in the first mode M1 is tilted and deployed.

For example, the spoiler 3000 may operate in the first mode M1 during cruising. In the first mode M1, the spoiler 3000 implements a variable structure in which the end of the trunk lid T extends rearward, thereby reducing a vortex at the rear of the vehicle C and increasing a driving distance. In addition, the spoiler 3000 may operate after being switched from the first mode M1 to the second mode M2 during bad weather and high-speed driving. Accordingly, it is possible to improve driving stability.

The frame part 3100 is connected to a holder 4300 of a driving module 4000 to be described below to slide along with the holder 4300. That is, as the holder 4300 moves, the frame part 3100 connected to the holder 4300 also moves.

The frame part 3100 may have a guide bar 3110 connected to the guide groove 2100. A guide bar 3110 may include a center guide bar 3111 connected to the center guide groove 2110 and a side guide bar 3112 connected to the side guide groove 2120. The guide bar 3110 may guide the frame part 3100 in the front-rear direction when the frame part 3100 slides in connection with the guide groove 2100.

The flap part 3200 may be disposed on the frame part 3100 and rotatably connected to the frame part 3100.

A flap bracket 3210 may be attached to a bottom surface of the flap part 3200, and a frame bracket 3120 may be attached to the frame part 3100. The flap part 3200 may be connected to the frame part 3100 through a link module 3300 connecting the flap bracket 3210 to the frame bracket 3120. In addition, the flap part 3200 is formed to rotate and tilt upward from the frame part 3100 when the link module 3300 rotates.

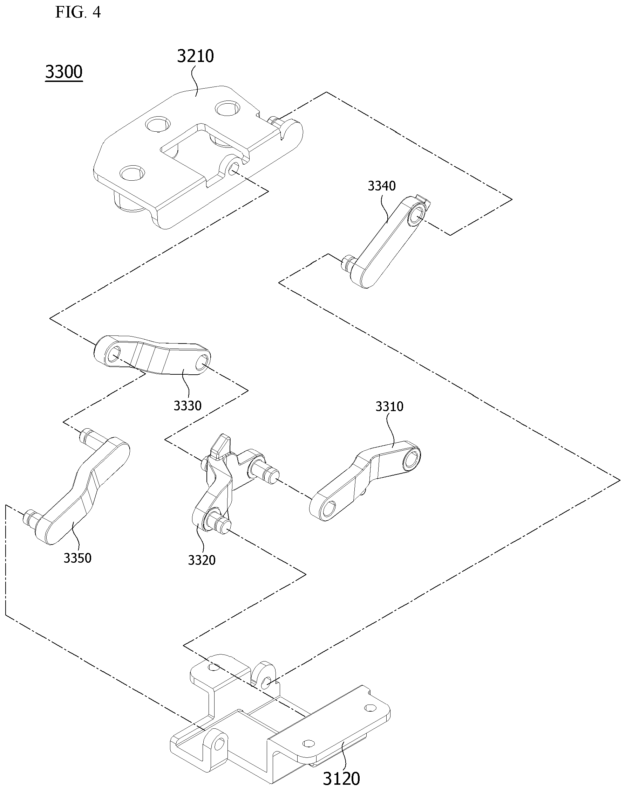

As illustrated in FIGS. 4 to 6, the link module 3300 may include a driving link 3310, a first connection link 3320, a second connection link 3330, a first driven link 3340, and a second driven link 3350.

One end of the driving link 3310 may be rotatably connected to the driving module 4000 to be described below. The driving link 3310 may move in the front-rear direction using power transmitted from the driving module 4000 and rotate the first connection link 3320.

One end of one surface of the first connection link 3320 may be rotatably connected to the front portion of one side of the frame bracket 3120, and the other end of the one surface may be rotatably connected to the other end of the driving link 3310.

One end of the first driven link 3340 may be rotatably connected to the front portion of the other side of the frame bracket 3120, and the other end may be rotatably connected to the front portion of one side of the flap bracket 3210.

One end of the second driven link 3350 may be rotatably connected to the rear portion of the other side of the frame bracket 3120, and the other end may be rotatably connected to the rear portion of one side of the flap bracket 3210.

One end of the second connection link 3330 may be rotatably connected to the other surface of the first connection link 3320, and the other end may be rotatably connected to the other end of the second driven link 3350. In this case, the other end of the second driven link 3350 may be connected to the flap bracket 3210 through the second connection link 3330.

When the driving link 3310 is moved in a rearward direction of the vehicle by the operation of the driving module 4000, based on one end connected to the frame bracket 3120 as a rotational axis, the other end of the first connection link 3320 moves upward from the frame bracket 3120 and rotates rearward. As the first connection link 3320 rotates rearward, the second connection link 3330 also moves rearward, and the second driven link 3350 connected to the second connection link 3330 rotates rearward using one end connected to the frame bracket 3120 as a rotational axis and moves upward from the frame bracket 3120 while moving the flap bracket 3210 rearward. In addition, the rearward and forward movement of the front portion of the flap bracket 3210 is restricted by the first driven link 3340. That is, as the first driven link 3340 and the second driven link 3350 respectively connected to the front and rear portions of the flap bracket 3210 rotate rearward, the flap bracket 3210 moves rearward, and the rear portion of the flap bracket 3210 may be lifted by the second driven link 3350 and the second connection link 3330 which have a relatively long length compared to the first driven link 3340, and thus may be disposed to tilt at an angle of about 40°. Accordingly, the flap part 3200 may enter the second mode M2 state.

When the driving link 3310 is moved forward of the vehicle by the operation of the driving module 4000 in a state in which the flap bracket 3210 is tilted, the first connection link 3320, the first driven link 3340, and the second driven link 3350 may rotate forward in opposite directions, and the flap bracket 3210 may return to an original position and may be disposed parallel to the frame bracket 3120. Accordingly, the flap part 3200 may be switched from the second mode M2 to the first mode M1.

In this way, the flap part 3200 may tilt upward from the frame part 3100 through the rotation operation of the link module 3300 to be switched to the deployed state and rotate downward in the deployed state and come into close contact with the frame part 3100 to be switched to a closed state.

In an embodiment, the spoiler 3000 may be provided with a rear lamp 3400.

The rear lamp 3400 may include a lamp housing 3410 coupled to the end of the frame part 3100, and a plurality of light sources (not illustrated) may be provided in the lamp housing 3410. In an embodiment, a light emitting diode (LED) may be used as the light source.

The lamp housing 3410 may extend in a longitudinal direction of the frame part 3100. The plurality of light sources may be arranged along the lamp housing 3410.

The rear lamp 3400 may be attached to the rear portion of the spoiler 3000 and exposed reward from the vehicle at the end of the trunk lid T. The rear lamp 3400 may serve as a daytime driving light and a brake light.

In particular, since the rear lamp 3400 may operate normally even in a state in which the frame part 3100 is drawn to the rear of the vehicle in the first mode M1 and the second mode M2, it is possible to improve the visibility of a following driver and prevent accidents.

The operation of the spoiler 3000 in the first mode M1 and the second mode M2 may be performed through the driving of the driving module 4000. The driving module 4000 is formed to transmit the power of the actuator 1000 to the spoiler 3000. The driving module 4000 may be provided as a pair of driving modules.

As illustrated in the drawing, the driving module 4000 may include a first loader 4100, a second loader 4200, a holder 4300, and an ejector 4400.

One end of the first loader 4100 may be connected to an end portion of the shaft 1100 on the movement space 2210. The first loader 4100 may be formed to rotate along with the shaft 1100 when the shaft 1100 rotates. That is, when the shaft 1100 rotates in one direction, the first loader 4100 rotates in the same direction as the shaft 1100 using the shaft 1100 as an axis.

One end of the second loader 4200 may be rotatably connected to the other end of the first loader 4100. The second loader 4200 may be formed to move the other end in the front-rear direction along the movement space 2210 when the first loader 4100 rotates. That is, the second loader 4200 may convert the rotational motion of the shaft 1100 into the linear motion of the vehicle in the front-rear direction in connection with the first loader 4100.

A pair of connection protrusions 4210 may be provided at the other end of the second loader 4200. One of the pair of connection protrusions 4210 may be connected to one end of the driving link 3310. In addition, the other of the pair of connection protrusions 4210 may be connected to the ejector 4400.

The holder 4300 may be formed to slide along the movement space 2210 from a front end to rear end of the guide rail 2200. Specifically, the holder 4300 is connected to the ejector 4400, and as the ejector 4400 is moved forward and rearward by the second loader 4200, the holder 4300 also moves forward and rearward.

Meanwhile, the frame part 3100 of the spoiler 3000 may be connected to the holder 4300. The frame part 3100 also moves forward and rearward along with the holder 4300.

The holder 4300 may be formed with a structure having a substantially rectangular shape having a width corresponding to the size of the movement space 2210 in a width direction and may have an internal space 4310 extending in a longitudinal direction of the movement space 2210.

A guide cam 4320 may be rotatably coupled to the holder 4300. In an embodiment, the holder 4300 has an opening 4330 opened in the width direction of the movement space 2210, and the guide cam 4320 may be rotatably coupled to the opening 4330. The opening 4330 may be provided as a pair of openings, and the guide cam 4320 may also be provided as a pair of guide cams.

The guide cam 4320 may include a connection shaft 4321 corresponding to a rotational shaft, a first surface 4322 and a second surface 4323 connected at a right angle, and a curved third surface 4324 connecting the first surface 4322 to the second surface 4323. In an embodiment, the guide cam 4320 may have a quadrant shape.

The guide cam 4320 may be disposed to protrude to the internal space 4310 through rotation. In this case, the third surface 4324 may be disposed to face the internal space 4310 and the second surface 4323 may be disposed parallel to an outer surface of the holder 4300.

The guide cam 4320 may be disposed to protrude outward from the internal space 4310 through rotation. In this case, the third surface 4324 may be disposed to face the outer surface of the holder 4300, and the first surface 4322 may be disposed parallel to an inner surface of the holder 4300.

The guide rail 2200 may have an accommodation groove 2220 for accommodating the guide cam 4320 protruding outward from the internal space 4310. The accommodation groove 2220 may be provided to be recessed from the inner surface toward the outer surface of the guide rail 2200, and the size of the movement space 2210 in the width direction may be further increased in the accommodation groove 2220.

The ejector 4400 may be disposed in the internal space 4310 of the holder 4300 and formed to move forward and rearward along the internal space 4310. The ejector 4400 may include a body 4410 and a connection bar 4420. The body 4410 and the connection bar 4420 may be formed integrally.

The body 4410 may have a structure having a substantially rectangular shape having a width corresponding to the size of the internal space 4310 in the width direction and move from a front end to rear end of the internal space 4310. The body 4410 may have an insertion groove 4411 into which the guide cam 4320 protruding to the internal space 4310 is inserted. The insertion groove 4411 may be formed such that an outer surface of the body 4410, which faces the inner surface of the holder 4300, is recessed inward.

The connection bar 4420 may be provided to extend from the rear end of the body 4410 reward from the vehicle. An end of the connection bar 4420 may be rotatably connected to one of the pair of connection protrusions 4210 provided at the other end of the second loader 4200. Accordingly, as the second loader 4200 moves rearward, the ejector 4400 moves forward and rearward along the internal space 4310 of the holder 4300. Such a connection structure of the second loader 4200 and the ejector 4400 operates to linearly move the second loader 4200 forward and rearward. That is, the second loader 4200 is formed to linearly move forward and rearward through connecting the connection protrusion 4210 provided at the other end to the ejector 4400.

As the ejector 4400 moves forward and rearward, the holder 4300 connected to the ejector 4400 through the guide cam 4320 also moves forward and rearward.

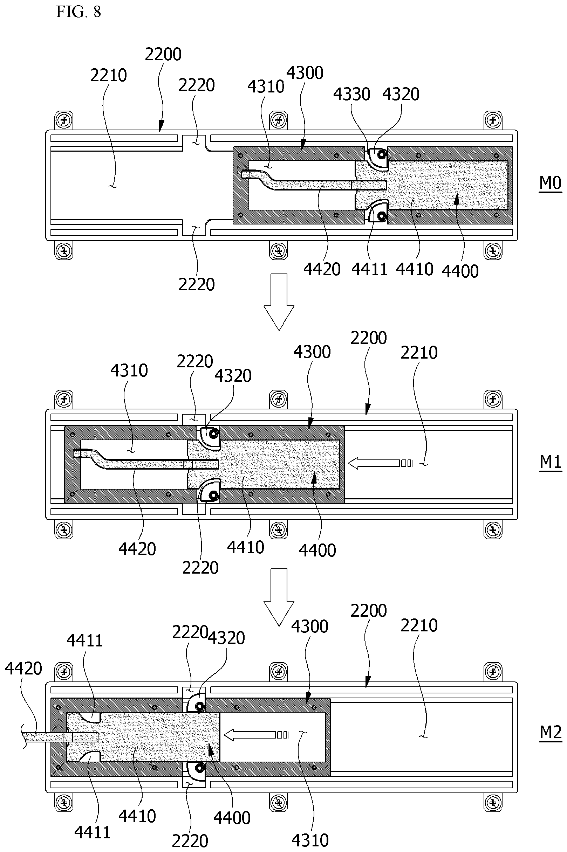

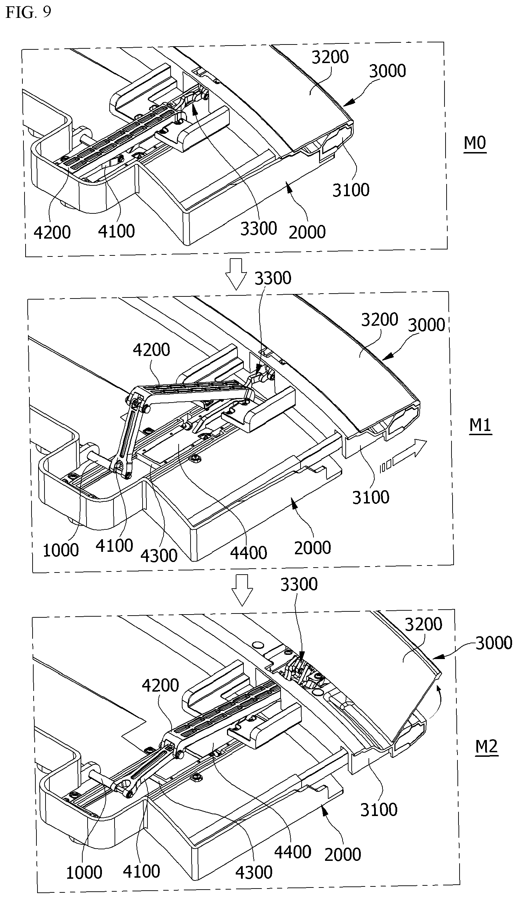

Referring to FIGS. 8 and 9, in the basic mode M0 state in which the spoiler 3000 is accommodated inside the trunk lid T, the first loader 4100 may be disposed to face the front portion of the vehicle, and the second loader 4200 may be disposed in the form stacked on the first loader 4100. The holder 4300 may be positioned at the front end of the movement space 2210, and the ejector 4400 may be positioned at the front end of the internal space 4310. The guide cam 4320 may be disposed to protrude to the internal space 4310 and inserted into the insertion groove 4411 of the ejector 4400 to be connected to the ejector 4400.

When the first mode M1 is activated by the operation of the actuator 1000, the first loader 4100 rotates toward the rear of the vehicle, and the second loader 4200 linearly moves rearward. The first loader 4100 and the second loader 4200 may be deployed in a triangular shape.

As the second loader 4200 moves rearward, the ejector 4400 connected to the connection protrusion 4210 of the second loader 4200 and the holder 4300 connected to the ejector 4400 through the guide cam 4320 may also move rearward. Specifically, in an operation section of the first mode M1, the guide cam 4320 is in contact with an inner surface of the guide rail 2200 and maintains a state of protruding to the internal space 4310, and the ejector 4400 moves rearward along the movement space 2210 of the guide rail 2200 along with the holder 4300 in a state in which the guide cam 4320 is inserted into the insertion groove 4411. At this time, in a state in which the ejector 4400 is positioned at the front end of the internal space 4310, the holder 4300 may be positioned at the rear end of the movement space 2210.

As the holder 4300 moves rearward along the movement space 2210, the frame part 3100 of the spoiler 3000 connected to the holder 4300 also linearly moves from the end of the trunk lid T to the rear of the vehicle along with the flap part 3200 and is drawn out (see FIG. 2).

When the second mode M2 is activated by an additional operation of the actuator 1000, the first loader 4100 rotates further to the rear of the vehicle, and the second loader 4200 further moves rearward. The first loader 4100 and the second loader 4200 may be deployed in a substantially straight shape.

As the second loader 4200 further moves rearward, the ejector 4400 may further move rearward and guide the linear movement of the second loader 4200. Specifically, in an operation section of the second mode M2, the holder 4300 does not move while positioned at the rear end of the movement space 2210, and only the ejector 4400 moves to the rear end of the internal space 4310 along the internal space 4310. In addition, the guide cam 4320 protrudes outward from the internal space 4310 through rotation and is accommodated in the accommodation groove 2220 of the guide rail 2200. In addition, the ejector 4400 moves rearward along the internal space 4310 in a state in which the guide cam 4320 is separated from the insertion groove 4411.

Since the holder 4300 does not move, the frame part 3100 of the spoiler 3000 maintains a state of being drawn out from the end of the trunk lid T to the rear of the vehicle. In addition, as the second loader 4200 linearly moves rearward, the flap part 3200 is rotated and tilted upward from the frame part 3100 by the rotation operation of the link module 3300 including the driving link 3310 connected to the connection protrusion 4210 of the second loader 4200.

Meanwhile, when the actuator 1000 operates so that the first loader 4100 and the second loader 4200 partially rotate and move forward, the flap part 3200 may rotate downward of the frame part 3100 in the deployed state and may be in close contact with the frame part 3100, and thus may be switched to the first mode M1. In addition, when the actuator 1000 additionally operates to completely rotate and move the first loader 4100 and the second loader 4200 forward, the flap part 3200 and the frame part 3100 are inserted into the trunk lid T and switched to the basic mode M0.

In this way, according to the embodiment of the present invention, the spoiler 3000 may be driven in a dual motion like the first mode M1 in which the spoiler 3000 linearly moves to the rear of the vehicle C and is deployed and the second mode M2 in which the flap part 3200 of the spoiler 3000 is tilted and opened in the deployed state, thereby maximizing an aerodynamic effect.

In addition, the rear lamp 3400 in the frame part 3100 of the spoiler 3000 may be provided to serve as a rear lighting device and may also serve as a rear lighting device in the first mode M1 in which the spoiler 3000 is deployed and in the second mode M2 in which the flap part 3200 is opened, thereby improving stability and marketability.

According to embodiments of the present invention, it is possible to provide a rear spoiler apparatus for a vehicle, which is installed on an inner side of a trunk lid of the vehicle to be drawn to the rear of the vehicle and tilts to adjust an airflow, thereby improving driving stability and aerodynamic performance.

Effects of the present invention are not limited to the above-described effects, and other effects that are not described will be able to be clearly understood by those skilled in the art from the following description.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A rear spoiler apparatus for a vehicle, the rear spoiler apparatus comprising:
an actuator configured to generate power;
a housing which has a guide groove and to which the actuator is coupled;
a spoiler including a frame part having a guide bar connected to the guide groove and a flap part rotatably connected to the frame part; and
a driving module configured to transmit the power of the actuator to the spoiler,
wherein the spoiler is configured to:
operate in a first mode in which the frame part and the flap part linearly move from an end of a trunk lid to the rear of the vehicle and the frame part is drawn out; and
operate in a second mode in which the flap part in the first mode state is tilted and the flap part is deployed.

2. The rear spoiler apparatus of claim 1, wherein the driving module includes:
a first loader of which one end is connected to a shaft connected to the actuator;
a second loader of which one end is rotatably connected to the other end of the first loader;
a holder configured to slide along a movement space of a guide rail provided in the housing; and
an ejector disposed in an internal space of the holder and rotatably connected to one of a pair of connection protrusions provided at the other end of the second loader.

3. The rear spoiler apparatus of claim 2, further comprising a guide cam rotatably coupled to the holder and disposed to protrude to the internal space through rotation,
wherein the ejector has an insertion groove into which the guide cam protruding to the internal space is inserted.

4. The rear spoiler apparatus of claim 3, wherein, in the first mode, the guide cam is configured to protrude to the internal space, and the ejector is configured to move rearward along the movement space of the guide rail along with the holder in a state in which the guide cam is inserted into the insertion groove, and
wherein, in the second mode, the guide cam is further configured to protrude outward from the internal space through rotation, and the ejector is further configured to move rearward along the internal space in a state in which the guide cam is separated from the insertion groove.

5. The rear spoiler apparatus of claim 3 or 4, wherein the guide rail has an accommodation groove configured to accommodate the guide cam protruding outward from the internal space.

6. The rear spoiler apparatus of any one of claims 2 to 5, wherein the frame part is connected to the holder to slide along with the holder.

7. The rear spoiler apparatus of any one of claims 2 to 6, wherein the flap part is configured to tilt upward from the frame part upon rotational operation of a link module connecting a flap bracket attached to a bottom surface of the flap part and a frame bracket attached to the frame part.

8. The rear spoiler apparatus of claim 7, wherein the link module includes:
a driving link of which one end is rotatably connected to the other of the pair of connection protrusions;
a first connection link of which one end of one surface is rotatably connected to a front portion of one side of the frame bracket and another end of the one surface is rotatably connected to the other end of the driving link;
a first driven link of which one end is rotatably connected to a front portion of the other side of the frame bracket and another end of the first driven link is rotatably connected to a front portion of one side of the flap bracket;
a second driven link of which one end is rotatably connected to a rear portion of the other side of the frame bracket and another end of the second driven link is rotatably connected to a rear portion of the one side of the flap bracket; and
a second connection link of which one end is rotatably connected to the other surface of the first connection link and the other end is rotatably connected to the other end of the second driven link.

9. The rear spoiler apparatus of any one of claims 1 to 8, further comprising a rear lamp provided on the spoiler.

10. The rear spoiler apparatus of claim 9, wherein the rear lamp includes a lamp housing coupled to an end of the frame part, and
wherein the rear spoiler further comprises a plurality of light sources that are provided in the lamp housing.
